# EUROPÄISCHE PATENTANMELDUNG

(11) **EP 0 749 792 A1**
(43) Veröffentlichungstag der Anmeldung: **27.12.1996**
(21) Anmeldenummer: 96104385.8
(22) Anmeldetag: 20.03.1996
(51) Int. Cl.: B23B 31/12

(54) **Spannbackenfutter, insbesondere Bohrfutter**

(30) Priorität: 23.06.1995 DE 19522829
(71) Anmelder: Röhm, Günter Horst, D-89567 Sontheim (DE)
(72) Erfinder: Röhm, Günter Horst, D-89567 Sontheim (DE)
(74) Vertreter: Dziewior, Joachim, Dipl.-Phys. Dr.

(57) **Zusammenfassung**

Das Spannbackenfutter besitzt einen Futterkörper (1) und einem daran festliegenden Spannbackenhalter (4), in dem die Spannbacken (5) an zur Futterachse (6) geneigten Spannflächen (7) und außerdem mit dem spindelseitigen Backenende radial verschiebbar an einem Mitnehmer (8) geführt sind, der in axialer Richtung verschiebbar im Futterkörper (1) angeordnet und an eine zum Spannen und Lösen des Futters von außen betätigbare Stelleinrichtung angeschlossen ist, die einen am Futterkörper (1) drehbar und axial unverschiebbar gelagerten Stellring (9) sowie im Futterkörper (1) radial neben dem Mitnehmer (8) angeordnete, parallele zur Futterachse verschiebbare Stellbolzen (10) umfaßt, die jeweils mit dem Mitnehmer (8) in einer axial Zug und Druck übertragenden Verbindung (12) stehen und eine Querverzahnung (13) aufweisen, die mit Innengewinde (14) am Stellring (9) im Eingriff steht.

## Beschreibung

Die Erfindung betrifft ein Spannbackenfutter, insbesondere Bohrfutter, mit einem an eine Drehspindel anschließbaren Futterkörper und einem daran festliegenden Spannbackenhalter, wobei die Spannbacken im Spannbackenhalter an zur Futterachse geneigten, zum werkzeugseitigen Futterende hin zusammenlaufenden Spannflächen und außerdem mit dem spindelseitigen Backenende radial verschiebbar an einem Mitnehmer geführt sind, der koaxial mit der Futterachse und in axialer Richtung verschiebbar im Futterkörper angeordnet und an eine zum Spannen und Lösen des Futters von außen betätigbare Stelleinrichtung angeschlossen ist.

Bei aus DE 36 10 671 C2 bekannten Spannbackenfuttern dieser Art besteht der Mitnehmer aus einem die radialen Führungen für die Spannbacken bildenden Mitnehmerkopf und einer sich daran in Richtung zur Drehspindel hin axial anschließenden, mit der Futterachse koaxialen zylindrischen Hülse, die an ihrer äußeren Umfangsfläche in einer axialen Bohrung des Futterkörpers geführt ist und innenseitig ein Muttergewinde aufweist, das in ein entsprechendes Außengewinde eines mit der Hülse gleich hohen Gewindezapfens greift, der an dem vom Mitnehmerkopf abgewandten Hülsenende einen im Futterkörper axial festgelegten Kegelzahnkranz trägt, der durch ein radial zur Futterachse im Futterkörper gelagertes Kegelzahnrad von außen betätigt werden kann und zusammen mit dem Gewindezapfen einerseits und dem Kegelzahnrad andererseits die Stelleinrichtung bildet. Wird das Kegelzahnrad, beispielsweise mittels eines am Futter einsteckbaren Futterschlüssels verdreht, ergibt ich über den Gewindezapfen eine axiale Mitnehmerverstellung, die eine entsprechende Spannbackenverstellung zur Folge hat. Bei diesen Spannbackenfuttern greifen die axialen Stützkräfte für die Spannbacken am Mitnehmerkopf radial außerhalb des zentralen Gewindezapfens an und übertragen daher Kippmomente auf den Mitnehmer, die durch die Führung des Mitnehmers im Futterkörper aufgenommen werden. Diese Führung ist jedoch mit einem gewissen Spiel behaftet, um einen Passungsausgleich im Gewinde zwischen der Hülse und dem durch den Kegelzahnkranz am Futterkörper geführten Gewindezapfen zu ermöglichen. Im Rahmen dieses Spieles unvermeidliche Kippverstellungen des Mitnehmers haben axial unterschiedliche Stellungen der Spannbacken und damit Rundlaufprobleme des Futters zur Folge.

Bei einem aus DE 34 37 792 C2 bekannten Spannbackenfutter ähnlicher Art ist für jede Spannbacke ein eigener Mitnehmer in Form eines zur Futterachse parallelen Stellbolzens vorgesehen, der in einer axial hinter seiner Spannbacke im Futterkörper liegenden Führung verschiebbar ist. Am Futterkörper ist ein mit der Futterachse koaxialer Stellring drehbar und axial unverschiebbar gelagert, der zum Spannen und Lösen des Futters von außen betätigbar ist und ein Innengewinde aufweist, mit dem alle Stellbolzen durch jeweils eine Querverzahnung im Eingriff stehen. - Durch die Abstützung jeder Spannbacke an einem jeweils eigenen und axial unmittelbar hinter ihr im Futterkörper angeordneten Stellbolzen werden die axialen Abstützkräfte ohne das Entstehen von Kippmomenten von den Spannbacken in die Stellbolzen eingeleitet. Jedoch besteht ein gewisses Spiel bezüglich des Gewindeeingriffs der Stellbolzen im Innengewinde des Stellrings, so daß im Rahmen dieses Spiels gegenseitige axiale Verstellungen der Stellbolzen möglich sind und daher auch hier entsprechend unterschiedliche axiale Stellungen der Spannbacken mit entsprechenden Rundlaufschwierigkeiten nicht ganz ausgeschlossen werden können.

Der Erfindung liegt die Aufgabe zugrunde, ein Spannbackenfutter der eingangs genannten Art so auszubilden, daß die erwähnten Rundlaufprobleme vermieden werden.

Diese Aufgabe wird nach der Erfindung bei einem Spannbackenfutter mit den eingangs genannten Merkmalen dadurch gelöst, daß die Stelleinrichtung einen am Futterkörper koaxial mit der Futterachse drehbar und axial unverschiebbar gelagerten Stellring sowie im Futterkörper radial neben dem Mitnehmer angeordnete, zur Futterachse parallele und in dieser Richtung verschiebbare Stellbolzen umfaßt, die jeweils mit dem Mitnehmer in einer axial Zug und Druck übertragenden Verbindung stehen und eine Querverzahnung aufweisen, die mit einem zylindrischen Innengewinde am Stellring im Eingriff steht.

Bei dem erfindungsgemäßen Spannbackenfutter entfällt somit der Gewindeantrieb des Mitnehmers durch einen unmittelbar an ihm angreifenden Gewindezapfen, so daß sich ein Passungausgleich in Bezug auf den Gewindezapfen erübrigt und ein nur durch den Fertigungsaufwand bestimmtes sehr geringes Führungsspiel des Mitnehmers im Futterkörper möglich ist. Der Anschluß der Stellbolzen am Mitnehmer bleibt hierauf ohne nennenswerten Einfluß, da sich die Stellbolzen im radialen Abstand neben dem Mitnehmer befinden und sich durch ihr Spiel am Stellring bedingte axiale Stellungsunterschiede nur entsprechend gering auf den Mitnehmer auswirken können.

In einer bevorzugten Ausführungsform der Erfindung sind die Stellbolzen, zweckmäßigerweise zu dritt, im Futterkörper gleichmäßig über den Umfang des Mitnehmers verteilt angeordnet. Weiter empfiehlt es sich, daß der Mitnehmer einen die radialen Führungen für die Spannbacken aufweisenden Mitnehmerkopf und einen daran in Richtung zur Drehspindel hin anschließenden Mitnehmerschaft besitzt, an dem der Mitnehmer im Futterkörper axial geführt ist. Vorzugsweise ist der Mitnehmerschaft axial erheblich länger als der Mitnehmerkopf, so daß sich eine große axiale Führungslänge des Mitnehmerschafts im Futterkörper ergibt, was eine optimale Führung des Mitnehmers insgesamt im Futterkörper gewährleistet. Außerdem empfiehlt es sich in dieser Hinsicht, den Mitnehmer im Übergangsbereich zwischen dem Mitnehmerkopf und dem Mitnehmerschaft mit den Stellbolzen zu verbinden. Die Verbindung zwischen den Stellbolzen und dem Mitnehmer dicht am Mitnehmerkopf ist im allgemeinen so auszubilden, daß sie nur axiale Kraftkomponenten zu übertragen vermag. Dazu empfiehlt es sich, daß am Mitnehmer zwischen dem Mitnehmerkopf und dem Mitnehmerschaft eine Ringnut ausgebildet ist, in die die Stellbolzen mit radial einwärts gerichteten Hakenstücken eingreifen. Im einzelnen ist zweckmäßigerweise die Ringnut zwischen dem Mitnehmerkopf einerseits und einem Ringbund am Mitnehmerschaft andererseits ausgebildet, wobei die Ringnut und/oder der Ringbund zur Futterachse senkrechte Ringflächen aufweisen, welchen die Stellbolzen mit entsprechenden Mitnehmerflächen formschlüssig anliegen.

Eine weiter bevorzugte Ausführungsform der Erfindung ist dadurch gekennzeichnet, daß die Stellbolzen einen die Querverzahnung aufweisenden zylindrischen Schaft besitzen, mit dem sie in jeweils ihre Führung bildenden zylindrischen Kanälen im Futterkörper liegen. Weiter ist zweckmäßig die Querverzahnung von Zähnen gebildet, die entsprechend der Steigung des Innengewindes im Stellring geneigt und mit Zahnrücken bzw. Zahnbrust entsprechend den Krümmungsradius des Stellrings gebogen verlaufen. Auf diese Weise ergibt sich ein besonders gute Tragverhältnisse aufweisender Gewindeeingriff zwischen den Stellbolzen und dem Stellring.

Im übrigen besteht im Rahmen der Erfindung die Möglichkeit, daß der Mitnehmer einen axialen zentralen Durchgangskanal aufweist, der für die Zuführung von Kühl- und/oder Schmierflüssigkeit zum Werkzeug mit einem entsprechend im Futterkörper vorgesehenen Kanal in Verbindung steht.

Eine weiter bevorzugte Ausführungsform ist dadurch gekennzeichnet, daß der Mitnehmerkopf eine zylindrische, mit der Futterachse koaxiale äußere Umfangsfläche besitzt und damit in einer zylindrischen Bohrung des im Futterkörper gegen Verdrehen und Verschieben gesicherten Spannbackenhalters geführt ist. Auf diese Weise ergibt sich eine Führung des Mitnehmers nicht nur im Bereich des Mitnehmerschaftes am Futterkörper, sondern auch im Bereich des Mitnehmerkopfes unmittelbar am Spannbackenhalter.

Im folgenden wird die Erfindung an einem in der Zeichnung dargestellten Ausführungsbeispiel näher erläutert; es zeigen:

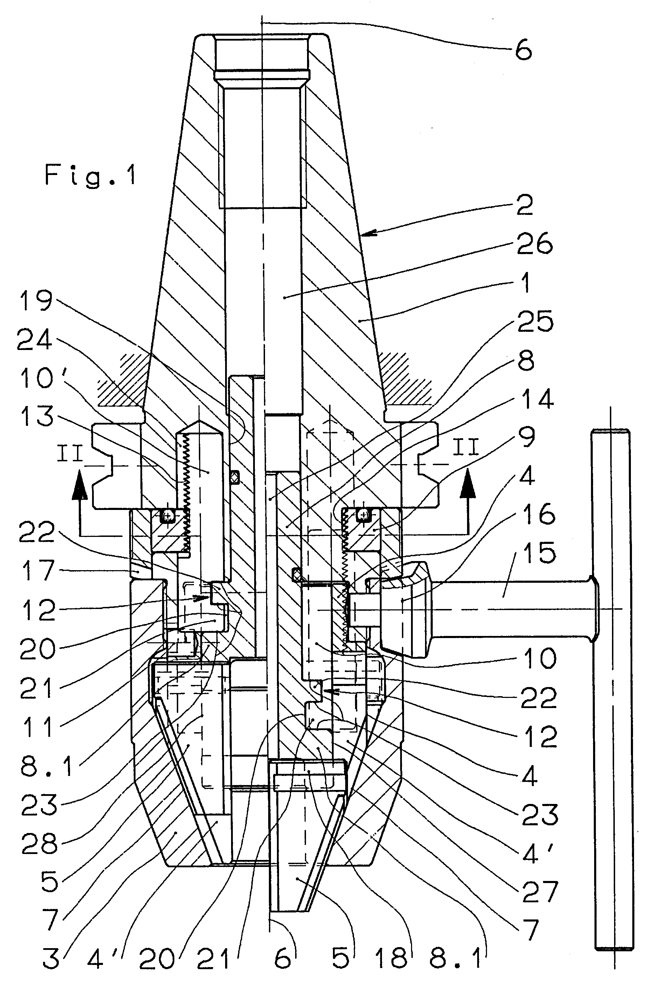

- Fig. 1: einen Axialschnitt durch ein Spannbackenfutter nach der Erfindung, und zwar mit unterschiedlichen Spannbackenstellungen in der linken bzw. rechten Zeichnungshälfte, wobei die Spannbackenstellung in der linken Zeichnungshälfte dem größten Spannbackendurchmesser, die Spannbackenstellung in der rechten Zeichnungshälfte dem kleinsten Spannbackendurchmesser entspricht,

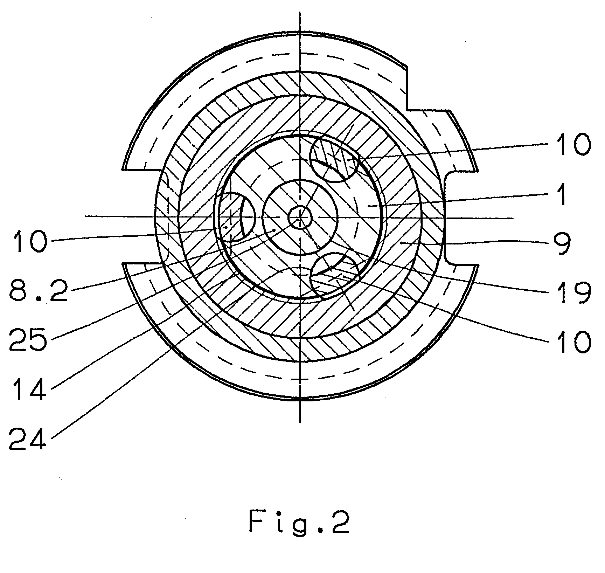

- Fig. 2: einen Querschnitt durch das Spannbackenfutter nach Fig. 1.

Das in der Zeichnung dargestellte Spannbackenfutter besitzt einen Futterkörper 1, der mit einer Kegelaufnahme 2 zum Anschluß an eine in der Zeichnung nicht dargestellte Drehspindel versehen ist. Am werkzeugseitigen Ende des Futterkörpers 1 ist fest eine Konushülse 3 angeschraubt, in der axial unverschieblich und drehschlüssig, nämlich gesichert durch einen Zapfen 11, ein Spannbackenhalter 4 angeordnet ist. Die Spannbacken 5 sind in Schlitzen 4' dieses Spannbackenhalters 4 und außerdem an der Konushülse 3 an zur Futterachse 6 geneigten, zum werkzeugseitigen Futterende hin zusammenlaufenden Spannflächen 7 geführt. Außerdem sind die Spannbacken 5 mit dem spindelseitigen Backenende radial verschiebbar an einem Mitnehmer 8 geführt, der koaxial mit der Futterachse 6 und in axialer Richtung verschiebbar im Futterkörper 1 angeordnet und an eine zum Spannen und Lösen des Futters von außen betätigbare Stelleinrichtung angeschlossen ist. Diese Stelleinrichtung umfaßt einen am Futterkörper 1 koaxial mit der Futterachse 6 drehbar und axial unverschiebbar gelagerten Stellring 9 sowie im Futterkörper 1 radial neben dem Mitnehmer 8 angeordnete, zur Futterachse 6 parallele und in dieser Richtung verschiebbare Stellbolzen 10, die zu dritt im Futterkörper 1 gleichmäßig über den Umfang des Mitnehmers 8 verteilt vorgesehen sind. Diese Stellbolzen 8 stehen jeweils mit dem Mitnehmer 8 in einer axial Zug und Druck übertragenden, allgemein mit 12 bezeichneten Verbindung und sind mit einer Querverzahnung 13 versehen, die mit einem allen Stellbolzen 10 gemeinsamen zylindrischen Innengewinde 14 am Stellring 9 im Eingriff steht. Zum Spannen und Lösen des Spannfutters ist der Stellring 9 von außen zu betätigen, entweder direkt von Hand oder mit Hilfe eines am Futterkörper 1 ansetzbaren Spannschlüssels 15, der mit einem Zahnritzel 16 in einen am Stellring 9 vorgesehenen Zahnkranz 17 eingreift.

Im einzelnen besitzt der Mitnehmer 8 einen die radialen Führungen 18 für die Spannbacken 5 aufweisenden Mitnehmerkopf 8.1, wobei diese Führungen 18 in üblicher Weise so ausgebildet sind, daß sie zwar eine radiale Verschiebung der Spannbacken 5 am Führungskopf 8.1 ermöglichen, axiale Verstellungen der Spannbacken 5 in Bezug auf den Führungskopf 8.1 aber ausschließen. Weiter besitzt der Mitnehmer 8 einen an den Führungskopf 8.1 in Richtung zur Drehspindel hin anschließenden zylindrischen Mitnehmerschaft 8.2, an dem der Mitnehmer 8 im Futterkörper 1 in einer Führungsbohrung 19 geführt ist, wobei der Mitnehmerschaft 8.2 axial erheblich länger als der Mitnehmerkopf 8.1 ist, so daß sich eine große axiale Führungslänge für den Mitnehmer 8 im Futterkörper 1 ergibt. Außerdem besitzt der Mitnehmerkopf 8.1 eine zylindrische, mit der Futterachse 6 koaxiale äußere Umfangsfläche 27, mit der er in einer zylindrischen Führungsbohrung 28 des Spannbackenhalters 4 geführt ist. Die Stellbolzen 10 sind deswegen dicht am Mitnehmerkopf 8.1, im Übergangsbereich zwischen dem Mitnehmerkopf 8.1 und dem Mitnehmerschaft 8.2 an den Mitnehmer 8 angeschlossen, und zwar derart, daß zwischen den Stellbolzen 10 einerseits und dem Mitnehmer 8 nur axiale Kraftkomponenten übertragen werden können. Dies, wie auch der Anschluß der Stellbolzen 10 axial dicht am Mitnehmerkopf 8.1 tragen weiter dazu bei, Kippverstellungen des Mitnehmers 8 in seiner Führung 19 im Futterkörper 1 auszuschließen. Im einzelnen ist dazu am Mitnehmer 8 zwischen dem Mitnehmerkopf 8.1 und dem Mitnehmerschaft 8.2 eine Ringnut 20 ausgebildet, in die die Stellbolzen 10 mit radial einwärts gerichteten Hakenstücken 21 eingreifen, so daß die Stellbolzen 10 am Mitnehmer 8 gleichsam nur axial eingehängt sind. Die Ringnut 20 befindet sich zwischen dem Mitnehmerkopf 8.1 einerseits und einem Ringbund 22 am Mitnehmerschaft 8.2 andererseits, wobei die Ringnut 20 und der Ringbund 22 zur Futterachse 6 senkrechte Ringflächen aufweisen, welchen die Stellbolzen 10 mit entsprechenden Flächen 23 formschlüssig anliegen.

Die Stellbolzen 10 besitzen einen die Querverzahnung 13 tragenden langen zylindrischen Schaft 10', mit dem sie in jeweils ihre Führung bildenden zylindrischen Kanälen 24 im Futterkörper 1 liegen. Die Querverzahnung 13 ist von Zähnen gebildet, die entsprechend der Steigung des Innengewindes 14 im Stellring 9 geneigt verlaufen und außerdem mit dem Zahnrücken bzw. der Zahnbrust entsprechend dem Krümmungsradius des Stellrings 9 gebogen um die Futterachse 6 verlaufen. Der Mitnehmer 8 besitzt einen axialen zentralen Durchgangskanal 25, der für die Zuführung von Kühl- und/oder Schmierflüssigkeit zum Werkzeug mit einem entsprechend axial im Futterkörper 1 vorgesehenen Kanal 26 in Verbindung steht.

## Patentansprüche

1. Spannbackenfutter, insbesondere Bohrfutter, mit einem an eine Drehspindel anschließbaren Futterkörper (1) und einem daran festliegenden Spannbackenhalter (4), wobei die Spannbacken (5) im Spannbackenhalter (4) an zur Futterachse (6) geneigten, zum werkzeugseitigen Futterende hin zusammenlaufenden Spannflächen (7) und außerdem mit dem spindelseitigen Backenende radial verschiebbar an einem Mitnehmer (8) geführt sind, der koaxial mit der Futterachse (6) und in axialer Richtung verschiebbar im Futterkörper (1) angeordnet und an eine zum Spannen und Lösen des Futters von außen betätigbare Stelleinrichtung angeschlossen ist, dadurch gekennzeichnet, daß die Stelleinrichtung einen am Futterkörper (1) koaxial mit der Futterachse (6) drehbar und axial unverschiebbar gelagerten Stellring (9) sowie im Futterkörper (1) radial neben dem Mitnehmer (8) angeordnete, zur Futterachse (6) parallele und in dieser Richtung verschiebbare Stellbolzen (10) umfaßt, die jeweils mit dem Mitnehmer (8) in einer axial Zug und Druck übertragenden Verbindung (12) stehen und eine Querverzahnung (13) aufweisen, die mit einem zylindrischen Innengewinde (14) am Stellring (9) im Eingriff steht.

2. Spannbackenfutter nach Anspruch 1, dadurch gekennzeichnet, daß die Stellbolzen (10) im Futterkörper (1) gleichmäßig über den Umfang des Mitnehmers (8) verteilt sind.

3. Spannbackenfutter nach Anspruch 1 oder 2, dadurch gekennzeichnet, daß der Mitnehmer (8) einen die radialen Führungen (18) für die Spannbacken (5) aufweisenden Mitnehmerkopf (8.1) und einen daran in Richtung zur Drehspindel hin anschließenden Mitnehmerschaft (8.2) besitzt, an dem der Mitnehmer (8) im Futterkörper (1) axial geführt ist.

4. Spannbackenfutter nach Anspruch 3, dadurch gekennzeichnet, daß der Mitnehmerschaft (8.2) axial erheblich länger als der Mitnehmerkopf (8.1) ist.

5. Spannbackenfutter nach Anspruch 3 oder 4, dadurch gekennzeichnet, daß der Mitnehmer (8) im Übergangsbereich zwischen dem Mitnehmerkopf (8.1) und dem Mitnehmerschaft (8.2) mit den Stellbolzen (10) verbunden ist.

6. Spannbackenfutter nach Anspruch 5, dadurch gekennzeichnet, daß am Mitnehmer (8) zwischen dem Mitnehmerkopf (8.1) und dem Mitnehmerschaft (8.2) eine Ringnut (20) ausgebildet ist, in die die Stellbolzen (10) mit radial einwärts gericheten Hakenstücken (21) eingreifen.

7. Spannbackenfutter nach Anspruch 6, dadurch gekennzeichnet, daß die Ringnut (20) zwischen dem Mitnehmerkopf (8.1) einerseits und einem Ringbund (22) am Mitnehmerschaft (8.2) andererseits ausgebildet ist, wobei die Ringnut und/oder der Ringbund zur Futterachse (6) senkrechte Ringflächen aufweisen, welchen die Stellbolzen (10) mit entsprechenden Flächen (23) formschlüssig anliegen.

8. Spannbackenfutter nach einem der Ansprüche 1 bis 7, dadurch gekennzeichnet, daß die Stellbolzen (10) einen die Querverzahnung (13) aufweisenden zylindrischen Schaft (10') besitzen, mit dem sie in jeweils ihre Führung bildenden zylindrischen Kanälen (24) im Futterkörper (1) liegen.

9. Spannbackenfutter nach Anspruch 8, dadurch gekennzeichnet, daß die Querverzahnung (13) von Zähnen gebildet ist, die entsprechend der Steigung des Innengewindes (14) im Stellring (9) geneigt und mit Zahnrücken bzw. Zahnbrust entsprechend dem Krümmungsradius des Stellrings (9) gebogen verlaufen.

10. Spannbackenfutter nach einem der Ansprüche 1 bis 9, dadurch gekennzeichnet, daß der Mitnehmer (8) einen axialen zentralen Durchgangskanal (25) aufweist, der für die Zuführung von Kühl- und/oder Schmierflüssigkeit zum Werkzeug mit einem entsprechend im Futterkörper (1) vorgesehenen Kanal (26) in Verbindung steht.

11. Spannbackenfutter nach einem der Ansprüche 3 bis 10, dadurch gekennzeichnet, daß der Mitnehmerkopf (8.1) eine zylindrische, mit der Futterachse (6) koaxiale äußere Umfangsfläche (27) besitzt und damit in einer zylindrischen Bohrung (28) des im Futterkörper (1) gegen Verdrehen und Verschieben gesicherten Spannbackenhalters (4) geführt ist.
